# EUROPEAN PATENT SPECIFICATION

(11) **EP 4 005 715 B1**
(45) Date of publication and mention of the grant of the patent: **23.08.2023**
(21) Application number: 21209493.2
(22) Date of filing: 22.11.2021
(51) Int. Cl.: B23D 47/02, B27B 5/065, B27M 1/08

(54) **SYSTEM FOR THE VARIATION OF THE SURFACE OF THE UNLOADING STATION OF A MACHINE FOR WORKING PANELS AND OPERATION METHOD THEREOF**
SYSTEM FÜR DIE ÄNDERUNG DER FLÄCHE DER ENTLADESTATION EINER PLATTENBEARBEITUNGSMASCHINE UND BEARBEITUNGSVERFAHREN DAMIT
SYSTEME DE VARIATION DE LA SURFACE D'UNE STATION DE DECHARGE D'UNE MACHINE D'USINAGE DE PANNEAUX ET METHODE D'UTILISATION DU SYSTEME

(30) Priority: 25.11.2020 IT 202000028304
(43) Date of publication of application: 01.06.2022
(73) Proprietor: SCM Group S.p.A., 47921 Rimini (RN) (IT)
(72) Inventor: GIAVOLUCCI, Gianluca, 47921 Rimini (IT)
(74) Representative: Tiburzi, Andrea

(56) References cited:
- EP-A1- 0 804 988
- EP-A1- 1 854 600
- DE-U1-202010 011 924
- KR-B1- 101 323 947

## Description

The present invention relates to a system for the variation of the unloading surface of a machine for machining pieces, in particular for the variation of the number of moving planes of the unloading station of the machine, according to the preamble of claim 1 (see for example DE 20 2010 011924 U1).

The present invention also relates to the operation method of the system.

More specifically, the invention relates to a system of the above type, designed and manufactured in particular for the machining pieces made of wood but also made of ceramic, glass, fiberglass, plastic, metal, and the like, capable of adding or removing shelves in the unloading station of the machine, according to the size of the outgoing piece, but which can be used for any station of the machine, in which it is necessary to change the surface able to house pieces of different sizes, to be machined or machined.

In the following, the description will be directed to an invention concerning a system capable of varying the surface of the unloading station of a cutting machine, in particular of a panel saw, as a function of the size of the machined piece to be unloaded, but it is clear that it should not be considered limited to this specific use.

As is well known, machines for cutting wooden pieces are currently used, in particular panel cutting machines, capable of cutting panels of different sizes.

The machined piece leaves the machine through an exit or unloading station, usually provided with one or more planes, from which the machined panels are picked up by an operator or a mechanical arm.

The surfaces of the unloading stations of known cutting machines are usually arranged side by side and parallel to each other.

Usually said planes are spaced apart and movable, generally according to a direction transversal with respect to the sliding direction of the outgoing pieces.

Currently, if the sizes of the outgoing piece are such as to cause the machined piece to fall into the space between two side-by-side planes, an operator can add one or more additional planes in the space between one plane and the next one.

This creates a continuous surface to prevent small machined parts from falling off.

However, it is clear that the need for the presence of an operator has various disadvantages, such as the expenditure of time for fixing the additional top, possible inaccuracies in the assembly, and the like.

Also, panel cutting machines are known in which the addition of shelves takes place automatically, by means of additional mobile planes installed on the initial stationary planes. On the basis of the output sizes of the piece, the additional mobile shelves are folded into the spaces present between one initial level and the next.

However, these machines have the disadvantage of incorrect positioning of the additional shelves which, having to tip over, may not reach the correct position.

In the light of the above, it is, therefore, an object of the present invention to provide a system for the variation of the surface of the unloading station of a machine for machining parts which is automatic.

A further object of the present invention is to provide a system for varying the surface of the unloading station of a machine for machining parts that is reliable and quick to use.

Another object of the present invention is to provide an operation method of the system.

It is, therefore, specific object of the present invention a system for the variation of the surface of the unloading station of a machine for working panels comprising at least one machine for cutting panels in wood, plastic, glass, fiberglass, ceramic and metal, comprising a loading station provided with a supporting plane, which extends along a second axis, to support at least one panel to be worked, a working unit in which said at least one panel is cut along a cutting line parallel to a first axis orthogonal to said second axis, an unloading station of said at least one worked panel, provided with a plurality of initial planes, arranged side by side and parallel with respect to said second axis and spaced apart, each being movable along said first axis; one or more additional planes stackable in a storage unit, a handling device capable of moving said one or more additional planes from said storage unit towards said unloading station and of arranging said one or more additional planes between said initial planes.

Further according to the invention, said handling device comprises a fixed base, arranged in the proximity of said unloading station, and a movable arm coupled to said fixed base, capable of picking up and moving said one or more additional planes.

Preferably according to the invention, said storage unit is arranged raised with respect to said unloading station.

Always according to the invention, said storage unit is arranged on said working unit of said machine.

Still according to the invention, said working unit comprises a central portion, where said panels are worked, a first lateral portion and a second lateral portion, opposed to said first lateral portion, and said storage unit is arranged on said first lateral portion or on said second lateral portion.

Further according to the invention, said storage unit comprises a supporting base fixed to said working unit, capable to house said one or more additional planes.

Preferably according to the invention, said one or more additional planes are provided with a friction portion on their surface.

Always according to the invention, said one or more additional planes comprises a toothed band on one side, comprising a plurality of teeth, and said one or more additional planes comprises a holed band on the opposite side, comprising a plurality of holes, so that, when said one or more additional planes are arranged stacked, the teeth of said toothed band of an underlying additional plane are capable to couple with the holes of said holed band of an overlying additional plane.

Still according to the invention, each initial plane, is provided on both its lateral surfaces with an elongated protrusion, which extends along said second axis, and said elongated protrusions pins are arranged capable to couple with the holes of said holed band of said additional planes, or on said elongated protrusions holes are obtained capable to house the pins of said additional planes.

Further according to the invention, said system comprises a hollow housing, arranged in said unloading station, aligned to said cutting line of said panels, capable of collecting the scraps coming from the working of said panels.

Preferably according to the invention, said system comprises an additional unloading module, arranged in said unloading station, capable of housing panels worked and coming out from said machine, arranged laterally to said cutting line.

Always according to the invention, said plurality of initial planes is movable manually or automatically by means of movement means, or by means of said handling device.

Still according to the invention, said system comprises a plurality of sensors capable to detect the presence of elements of said system and to send corresponding signals.

Further according to the invention, said plurality of sensors comprises a sensor capable to check the position of each plane of said plurality of planes along said first axis.

Preferably according to the invention, a sensor of said plurality of sensors is capable to detect the insertion of said additional planes on said protrusions.

Always according to the invention, a sensor of said plurality of sensors is capable to detect the presence of said additional planes in said storage unit.

Still according to the invention, a sensor of said plurality of sensors is capable to detect the number of said additional planes in said storage unit.

Further according to the invention, said system comprises a measurement element for measuring the positioning of said additional planes between said initial planes, and a sensor of said plurality of sensors is capable to detect the positioning of said measurement element.

It is further object of the present invention an operation method of a system for the variation of the surface of the unloading station of a machine for working panels in wood, plastic, glass, fiberglass, ceramic and metal, of the type comprising a plurality of initial planes, characterized in that it comprises the following steps:
A. providing a storage unit raised above said unloading station of said machine, comprising one or more additional planes;
B. checking if said plurality of initial planes are in the predefined position in said unloading station;
C. if necessary, picking up at least one additional plane at a time from said storage unit;
D. arranging at least one additional plane, taken in said step C., side by side to an initial plane.

Preferably according to the invention, said method may comprise the following sub- step:
A1. stacking one or more additional planes in said storage unit.

Preferably according to the invention, said steps C or D are performed by the handling device.

Always according to the invention, said method may comprise the following sub-steps:
E. working a panel;
F. if necessary, picking-up said worked panel from said unloading station of said machine and bringing it back to said loading station for a further working.

Still according to the invention, said method may comprise the following sub step:
E1. aligning said panel bringing it towards a flash member.

Always according to the invention, said method may comprise the following sub-steps:
G. checking the presence and/or the number of said additional planes in said storage unit;
H. emitting an alarm signal if the outcome of the checking of said step G. is negative and/or null.

The present invention will be now described, for illustrative but not limitative purposes, according to its preferred embodiments, with particular reference to the figures of the enclosed drawings, wherein:
figure 1 shows a top view of a system for varying the surface of the unloading station of a machine for working parts, object of the present invention;
figure 2 shows a further top view of the system of figure 1, in which the machine has a partially continuous unloading station;
figure 3 shows a further top view of the system of figure 1, in which the machine has a completely continuous unloading station;
figure 4 shows a front perspective view of a detail of the machine shown in figure 1;
figure 5 shows a perspective view of a component of the system shown in figure 1;
figure 5a shows a side perspective view of a plane included in the component shown in figure 5;
figure 5b shows a further lateral perspective view of a plane included in the component shown in figure 5; and
figure 6 shows a side perspective view of the system shown in figure 1.

In the various figures, similar parts will be indicated by the same reference numbers.

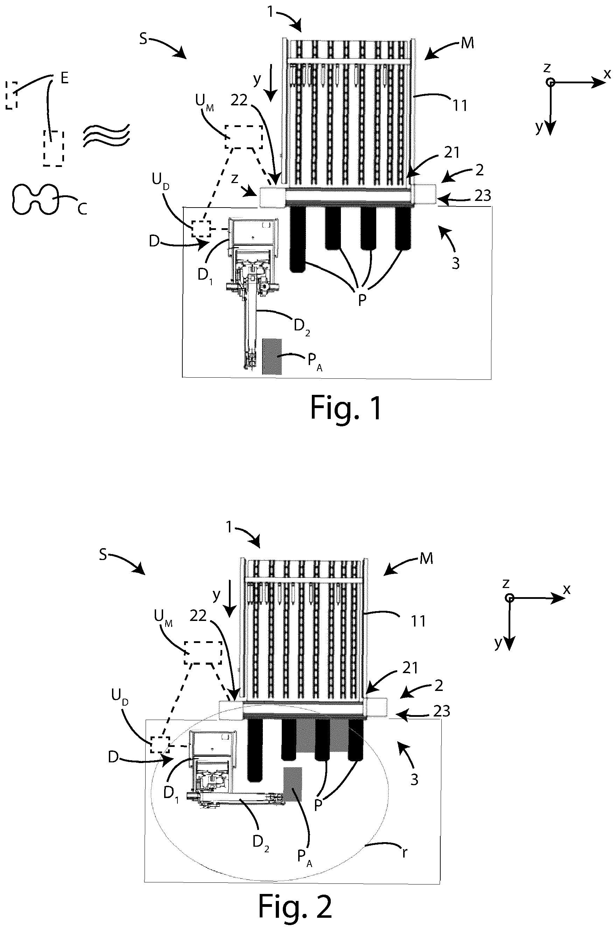

With reference to figures 1-3, a system S is described for the variation of the surface of the unloading station of a machine M for machining pieces made of wood, ceramic, glass, fiberglass, plastic, metal, and the like.

In the following description, reference will be made to a cutting machine M and to pieces which are wooden panels.

The machine M essentially comprises an input or loading station 1 of the panel, at least one working unit 2 to perform a respective working on one or more panels, an output or unloading station 3, and a logic control unit U_{M}, in which machining programs to be performed on the panels are memorized.

The panels to be machined are arranged on a supporting plane 11 of said loading station 1, which extends along a second Y-axis, and slide along an advancement direction parallel to said second Y-axis, until reaching the working unit 2, by means of a thrust exerted by one or more pressers, each of which may comprise one or more gripping and thrusting elements, such as for example pliers for gripping and moving the panel to be processed.

Said working unit 2 develops along a first X-axis, orthogonal to said second Y-axis and substantially performs cuts on the panels along a cutting line parallel to said first X-axis.

Said working unit 2 comprises a central portion 21, where the cutting tool works and where the cutting line is arranged and where the machining of the panels, therefore, takes place, a first side portion 22, arranged at one end of said central portion 21, and a second side portion 23, arranged diametrically opposite with respect to said first lateral portion 22.

Said working unit 2 also comprises a sawing carriage, not shown in the figures, arranged below the working surface, which supports one or more cutting blades, which protrude beyond said work surface through a slit.

Said sawing carriage is moved along said cutting line to make the cut on the panels to be worked.

When said sawing carriage does not perform the cutting work, it is arranged in proximity to said second side portion 23.

The pressing unit, not shown in the figure because it is covered by a covering carter, is arranged in the central portion 21 and vertically movable between a raised position, in which it does not contact the panel or packs of panels to be processed, and a lowered position, in which it contacts the panel or packs of panels to keep the panels in place during cutting.

Said working unit is supported by a first upright 222 and a second upright 233, arranged respectively in said first 22 and second 23 lateral portions.

The side portion 22 also comprises the electrical panel 223 of the machine M.

The panels machined by the working unit 2 of the machine M reach a supporting plane of said unloading station 3 and are picked up by an operator or by a mechanical arm.

Said unloading station 3 comprises a plurality of initial planes P, aligned with each other, which extend along said second Y-axis, therefore parallel to the advancement direction of the panel in the machine M, and spaced from each other.

Said initial planes P are defined "air curtain", as they have through holes on their surface, for the passage of air, which tends to support the panel leaving the working unit 2, thus reducing the support friction of the panel on the plane P.

In particular, in this embodiment, the initial planes P are four.

Each of said planes P is capable of longitudinally translating, or oscillating around its position, along said first X-axis.

The movement of each plane P can take place manually, by an operator, or automatically by means of movement means not shown in figure or by means of the handling device D as will be described in detail below.

Said machine M also comprises a user interface I, i.e. a Human Machine Interface (HMI), by means of which an operator is capable of entering data and/or controlling the operation of said machine M.

Said interface I is arranged in proximity to said first side portion 22 of said working unit 2.

Without departing from the scope of protection of the present invention, said interface I can also be arranged in proximity to said second side portion 23.

Said user interface I can be both fixed and mobile.

In the embodiment shown, said interface I can be rotatable.

In other embodiments, not shown in the figures, said interface I can be carriageable and/or adjustable, that is, movable by means of a carriage or conveyor.

Said system S also comprises a handling device D.

Said handling device D is substantially a mechanical arm or a robot with two or more axes.

Said handling device D comprises a fixed base D1, which is movably coupled to a movable arm D2, and a control logic unit U_{D}, capable of exchanging data with said logic control unit U_{M} of said machine M.

Said fixed base D1 is arranged on the ground, near said unloading area 3 of said machine M.

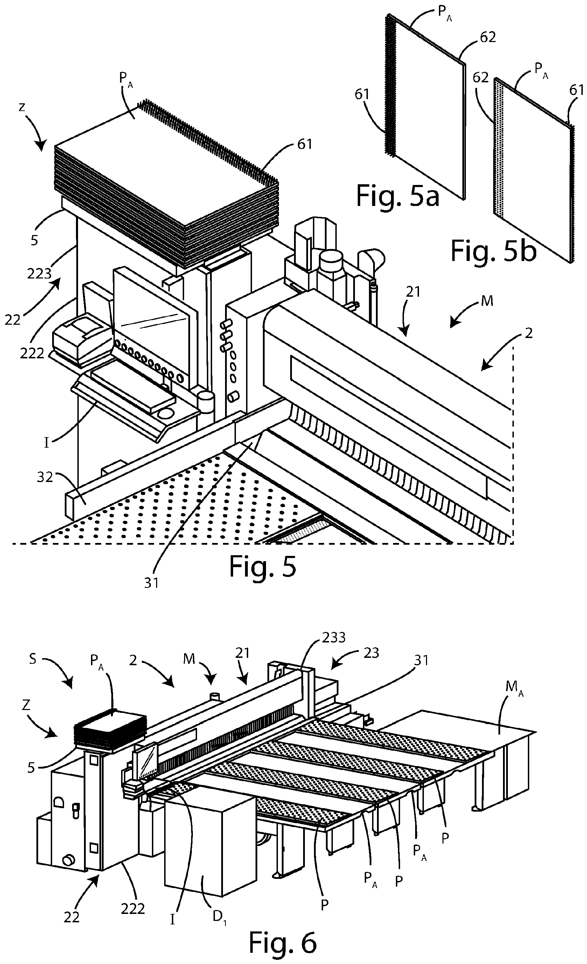

Referring to figures 5, 5a, and 5b, said system S comprises a storage unit Z arranged above the said unloading area 3 of said machine M.

In particular, said storage unit Z is arranged on said working unit 2 of said machine M.

Even more in detail, said storage unit Z is arranged in a lateral area, in particular near said first side portion 22 of said working unit 2.

Said storage unit Z is arranged above said electrical panel 223, not overlapped over the cutting line, so as to have more stability and not to be in the way for moving parts, such as the pressure group.

Said storage unit Z can also be arranged in proximity to said second side portion 22.

Said storage unit Z comprises a supporting base 5, which is fixed to said working unit 2 and is capable of housing one or more additional shelves P_{A}, stacked on top of each other.

With reference to figures 5, 5a, and 5b, said additional planes P_{A} are provided on their surface with a friction portion so that, when they are arranged one on top of the other on the base 5, they are able to remain stacked.

In particular, the friction portion is of the shape coupling type, in fact, said additional planes P_{A} have on one face a toothed band 61, comprising a plurality of teeth, while on the opposite face, a perforated band 62, comprising a plurality of holes, so that when said additional planes P_{A} are stacked one on top of the other, the teeth of the toothed band 61 of an additional plane P_{A} below, are inserted into the holes of the perforated band 62 of an additional plane P_{A} above, which is supported by said movable arm D2 in said storage unit Z.

Without departing from the scope of protection of the present invention, it is also possible that on said perforated band P_{A} there are pins.

Said handling device D is capable of picking up an additional plane P_{A} from said storage unit Z and transport it to said unloading area 3 of said machine M.

In particular, said additional planes P_{A} are arranged in the empty spaces between one plane P and the next, on the basis of the size of the panel processed at the outlet.

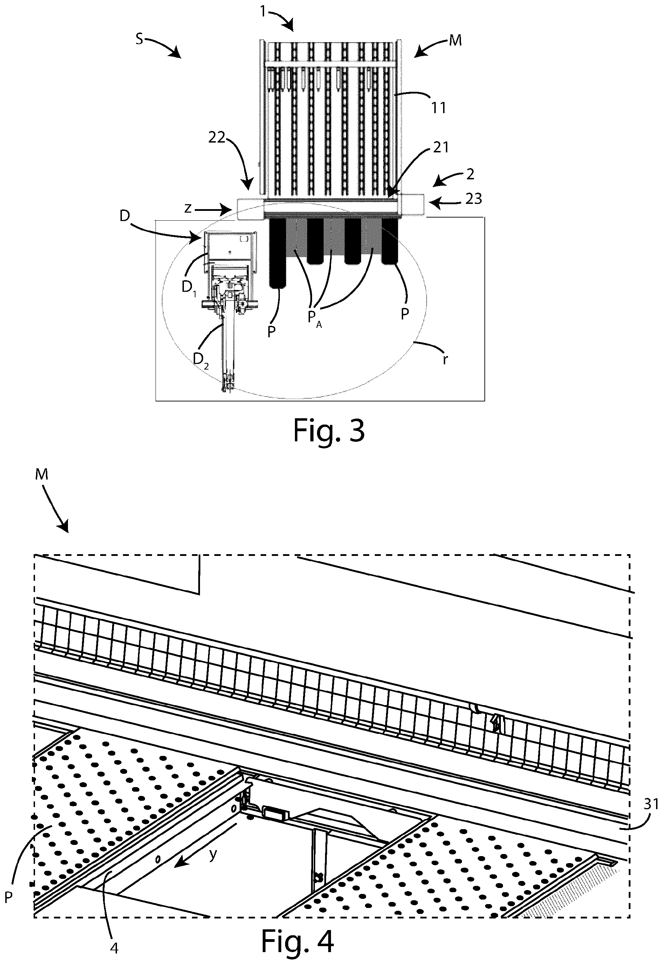

In particular, with reference to figure 4, each plane P has an elongated relief 4 on both of its lateral surfaces, which extends along said second Y-axis.

On said elongated reliefs 4 there are pins capable of being inserted into the holes of said perforated band 62 of said additional planes P_{A}, to ensure the correct and stable positioning of said additional planes P_{A}.

Without departing from the scope of protection of the present invention, it is also possible that on said elongated reliefs 4 holes are obtained, capable of housing the pins of said additional planes P_{A}.

Therefore, said movable arm D2 is able to rest the additional plane P_{A} on a protrusion 4 of a plane P and on the protrusion 4 of the subsequent plane P.

In said unloading station 3, in correspondence with the cutting line of said panels, there is a hollow housing 31 capable of collecting the small-sized scraps, deriving from the machining of the panels.

In particular, said hollow housing 31 extends along the whole or part of said cutting line, and is covered by a bulkhead capable of opening downwards during the machining of the panels, to cause the scraps deriving from the machining to fall by gravity.

Furthermore, as shown in figure 6, said unloading area 3 can comprise an additional unloading module M_{A} to house large dimensions panels machined at the outlet of said machine M.

Said additional unloading module M_{A} is used when said handling device D is active.

Said additional unloading module M_{A} is arranged laterally with respect to the cutting line, differently from said initial planes P or additional planes P_{A}, which are, instead, arranged in front of the cutting line, and can be both fixed and movable.

Said system S can be provided with a plurality of sensors 7, of the optical, load cell, acoustic or magnetic type, arranged in proximity to said storage unit Z and/or on said handling device D, capable of detecting the presence and/or the number of additional planes P_{A} in said storage unit Z.

Furthermore, a sensor of the optical or acoustic type, of said plurality of sensors 7, is capable of detecting that said user interface I, when it is mobile, is arranged so as not to interfere with said handling device D.

Said machine M is provided with a measuring member, of the template or mask or shape type, used to reproduce a spacing, the profile of an object, or the object itself, capable of measuring the correct positioning of said initial planes P in said output station 3.

Therefore, said plurality of sensors 7 also comprises a sensor for detecting the correct positioning of the template.

Furthermore, said plurality of sensors 7 comprises a sensor for detecting the correct positioning of said additional planes P_{A} on said reliefs 4.

Said plurality of sensors 7 also comprises sensors arranged on said initial planes P, to detect the positioning along said cutting line, as it will be described in detail below.

Said machine M is also provided with an abutment or square element 32, against which to rest the worked panel to realign it.

Said machine M can comprise or said logic control unit U_{M} of said machine M and logic control unit U_{D} of said handling device D can be connectable to mobile electronic devices E and/or a cloud infrastructure C, such as a server.

By mobile electronic device E is meant any electronic device E, such as a smartphone, tablet, laptop or the like.

Therefore, said logic control unit U_{M} of said machine M and/or said logic control unit U_{D} of said handling device D can be configured to send operating data of said machine M and/or said handling device D to said mobile electronic device E.

Furthermore, said logic control unit U_{M} of said machine M and/or said logic control unit U_{D} of said handling device D can be configured to send said operating data of said machine M and/or said handling device D also to a cloud server, and the latter can be configured to send said data to said mobile electronic devices E.

Said logic control unit U_{M} stores in its memory the configurations of said output station 3 necessary to receive the worked panels according to the different workings to be performed on the panels.

The operation of the system S for the variation of the surface of the unloading station of a machine M for the machining of pieces, described above, takes place in the following way.

When it is necessary to perform a machining on at least one wooden panel, it is first of all necessary to arrange the panel to be machined in said loading station 1, on said supporting plane 11.

Said panel is then transported to said working unit 2, where a cut along the cutting line is carried out, by said working unit 2, according to the machining program present in said logic control unit U_{M} of said machine M.

Once the cut has been made on the panel, this is moved towards the station 3.

Said logic control unit U_{M} of said machine M sends control signals to said logic control unit U_{D} of said handling device D, which, according to the size of the output panel, can add additional panels P_{A}.

Therefore, said movable arm D2, picks up an additional plane P_{A} at a time from said storage unit Z, to rest it on said reliefs 4 of said planes P, until it forms a continuous surface, if necessary, or partially continuous.

If it is necessary to rework said output panel, said movable arm D2 is capable of picking up said panel from said unloading area 3 and bringing it back to said loading area 1, on said supporting plane 11.

Should an output panel not be aligned with the cutting line, said movable arm D2 is able to align it, bringing it to abutment on said abutment element 32.

Before starting the machining, it is possible to check that said plurality of initial planes P is in the predefined position in said machine M.

In particular, the sensors arranged on said plurality of initial plans P, detect the position of said initial plans P along said cutting line, sending signals corresponding to said control logic unit U_{M}.

If said initial planes are not correctly arranged, signals are supplied to automatic handling devices or to the operator, so as to return said initial planes P to the correct position, corresponding to the machining performed on said panels.

It is also possible to check the presence and/or the number of said additional planes P_{A} in said storage unit Z and to emit an alarm signal if the result of the verification of said phase G is negative and/or null.

As is evident from the above description, the system for varying the surface of the unloading station of a machine for processing pieces of the present invention allows the surface of the unloading area of said machine to be varied according to the size of the worked panel, so as to avoid accidental falls of said worked panels, out of the machine itself.

## Claims

1. System (S) for the variation of the surface of the unloading station of a machine (M) for working panels comprising
at least one machine (M) for cutting panels in wood, plastic, glass, fiberglass, ceramic and metal, comprising a loading station (1) provided with a supporting plane (11), which extends along a second axis (Y), to support at least one panel to be worked, a working unit (2) in which said at least one panel is cut along a cutting line parallel to a first axis (X) orthogonal to said second axis (Y), an unloading station (3) of said at least one worked panel, provided with a plurality of initial planes (P), arranged side by side and parallel with respect to said second axis (Y) and spaced apart, each being movable along said first axis (X);
one or more additional planes (PA) stackable in a storage unit (Z);
said system (S) being **characterized**
**in that** it comprises a handling device (D) capable of moving said one or more additional planes (P_{A}) from said storage unit (Z) towards said unloading station (3) and of arranging said one or more additional planes (P_{A}) between said initial planes (P).

2. System (S) according to the preceding claim, **characterized in that** said handling device (D) comprises a fixed base (D1), arranged in proximity of said unloading station (3), and a movable arm (D2) coupled to said fixed base (D1), capable of picking up and moving said one or more additional planes (P_{A}).

3. System (S) according to any one of the preceding claims, **characterized in that** said storage unit (Z) is arranged raised with respect to said unloading station (3).

4. System (S) according to the preceding claim, **characterized in that** said storage unit (Z) is arranged on said working unit (2) of said machine (M).

5. System (S) according to any one of claims 3 or 4, **characterized**
**in that** said working unit (2) comprises a central portion (21), where said panels are worked, a first lateral portion (22) and a second lateral portion (23), opposed to said first lateral portion (22), and
**in that** said storage unit (Z) is arranged on said first lateral portion (22) or on said second lateral portion (23).

6. System (S) according to the preceding claim, **characterized in that** said storage unit (Z) comprises a supporting base (5) fixed to said working unit (2), capable to house said one or more additional planes (P_{A}).

7. System (S) according to any one of the preceding claims, **characterized in that** said one or more additional planes (P_{A}) are provided with a friction portion on their surface.

8. System (S) according to the preceding claim, **characterized in that** said one or more additional planes (P_{A}) comprises a toothed band (61) on one side, comprising a plurality of teeth, and said one or more additional planes (P_{A}) comprises a holed band (62) on the opposite side, comprising a plurality of holes, so that, when said one or more additional planes (P_{A}) are arranged stacked, the teeth of said toothed band (61) of an underlying additional plane (P_{A}) are capable to couple with the holes of said holed band (62) of an overlying additional plane (P_{A}).

9. System (S) according to the preceding claim, **characterized**
**in that** each initial plane (P), is provided on both its lateral surfaces with an elongated protrusion (4), which extends along said second axis (Y), and
**in that** on said elongated protrusions (4) pins are arranged capable to couple with the holes of said holed band (62) of said additional planes (PA), or on said elongated protrusions (4) holes are obtained capable to house the pins of said additional planes (PA).

10. System (S) according to any one of the preceding claims, **characterized in that** it comprises a hollow housing (31), arranged in said unloading station (3), aligned to said cutting line of said panels, capable of collecting the scraps coming from the working of said panels.

11. System (S) according to any one of the preceding claims, **characterized in that** it comprises an additional unloading module (MA), arranged in said unloading station (3), capable of housing panels worked and coming out from said machine (M), arranged laterally to said cutting line.

12. System (S) according to any one of the preceding claims, **characterized in that** each plane of said plurality of initial planes (P) is movable manually or automatically by means of movement means, or by means of said handling device (D).

13. System (S) according to any one of the preceding claims, **characterized in that** it comprises a plurality of sensors (7) capable to detect the presence of elements of said system (S) and to send corresponding signals.

14. System (S) according to the preceding claim, **characterized in that** said plurality of sensors (7) comprises a sensor capable to check the position of each plane of said plurality of planes (P) along said first axis (X).

15. System (S) according to any one of claims 13 or 14, when depending on claim 9, **characterized in that** a sensor of said plurality of sensors (7) is capable to detect the insertion of said additional planes (PA) on said protrusions (4).

16. System (S) according to any one of claims 13-15, **characterized in that** a sensor of said plurality of sensors (7) is capable to detect the presence of said additional planes (PA) in said storage unit (Z).

17. System (S) according to any one of claims 13-16, **characterized in that** a sensor of said plurality of sensors (7) is capable to detect the number of said additional planes (P_{A}) in said storage unit (Z).

18. System (S) according to any one of the preceding claims, **characterized**
**in that** it comprises a measurement element for measuring the positioning of said additional planes (P_{A}) between said initial planes (P), and
**in that** a sensor of said plurality of sensors (7) is capable to detect the positioning of said measurement element.

19. Operation method of a system (S) for the variation of the surface of the unloading station of a machine (M) for working panels in wood, plastic, glass, fiberglass, ceramic and metal, of the type comprising a plurality of initial planes (P), according to claims 1-18, **characterized in that** it comprises the following steps:
A. providing a storage unit (Z) raised above said unloading station (3) of said machine (M), comprising one or more additional planes (PA);
B. checking if said plurality of initial planes (P) are in the predefined position in said unloading station (3);
C. if necessary, picking-up at least one additional plane (P_{A}) at a time from said storage unit (Z);
D. arranging at least one additional plane (P_{A}), taken in said step C., side by side to an initial plane (P).

20. Method according to the preceding claim, **characterized in that** it comprises the following sub- step:
A1. stacking one or more additional planes (P_{A}) in said storage unit (Z).

21. Method according to any one of the claims 19 or 20, **characterized in that** said steps C or D are performed by the handling device (D).

22. Method according to anyone of the preceding the claims 19-21, **characterized in that** it comprises the following sub-steps:
E. working a panel;
F. if necessary, picking-up said worked panel from said unloading station (3) of said machine (M) and bringing it back to said loading station (1) for a further working.

23. Method according to the preceding claim, **characterized in that** it comprises the following sub step:
E1. aligning said panel bringing it towards an abutment element (32).

24. Method according to any one of the claims 19-23, **characterized in that** it comprises the following sub-steps:
G. checking the presence and/or the number of said additional planes (PA) in said storage unit (Z);
H. emitting an alarm signal if the outcome of the checking of said step G. is negative and/or null.

## Patentansprüche

1. System (S) zur Veränderung der Oberfläche der Entladestation einer Maschine (M) zur Bearbeitung von Platten, umfassend mindestens eine Maschine (M) zum Schneiden von Platten aus Holz, Kunststoff, Glas, Glasfaser, Keramik und Metall, umfassend eine Beladestation (1), die mit einer Tragebene (11) versehen ist, die sich entlang einer zweiten Achse (Y) erstreckt, um mindestens eine zu bearbeitende Platte zu tragen, eine Bearbeitungseinheit (2), in der die mindestens eine Platte entlang einer Schnittlinie parallel zu einer ersten Achse (X) orthogonal zu der zweiten Achse (Y) geschnitten wird, eine Entladestation (3) der mindestens einen bearbeiteten Platte, die mit einer Vielzahl von anfänglichen Ebenen (P) versehen ist, die nebeneinander und parallel zu der zweiten Achse (Y) angeordnet und voneinander beabstandet sind, wobei jede entlang der ersten Achse (X) bewegbar ist; eine oder mehrere zusätzliche Ebenen (PA), die in einer Speichereinheit (Z) stapelbar sind; wobei das System (S) **dadurch gekennzeichnet ist, dass** es eine Handhabungsvorrichtung (D) umfasst, die in der Lage ist, die eine oder mehreren zusätzlichen Ebenen (PA) von der Speichereinheit (Z) zu der Entladestation (3) zu bewegen und die eine oder mehreren zusätzlichen Ebenen (P_{A}) zwischen den ursprünglichen Ebenen (P) anzuordnen.

2. System (S) nach dem vorherigen Anspruch, **dadurch gekennzeichnet, dass** die Handhabungsvorrichtung (D) eine feste Basis (D1), die in der Nähe der Entladestation (3) angeordnet ist, und einen beweglichen Arm (D2), der mit der festen Basis (D1) gekoppelt ist, umfasst, und in der Lage ist, die eine oder mehrere zusätzliche Ebenen (P_{A}) aufzunehmen und zu bewegen.

3. System (S) nach einem der vorherigen Ansprüche, **dadurch gekennzeichnet, dass** die Speichereinheit (Z) erhöht in Bezug auf die Entladestation (3) angeordnet ist.

4. System (S) nach dem vorherigen Anspruch, **dadurch gekennzeichnet, dass** die Speichereinheit (Z) an der Bearbeitungseinheit (2) der Maschine (M) angeordnet ist.

5. System (S) nach einem der Ansprüche 3 oder 4, **dadurch gekennzeichnet, dass** die Bearbeitungseinheit (2) einen mittleren Abschnitt (21), in dem die Platten bearbeitet werden, einen ersten seitlichen Abschnitt (22) und einen zweiten seitlichen Abschnitt (23) gegenüber dem ersten seitlichen Abschnitt (22) umfasst, und dass die Speichereinheit (Z) auf dem ersten seitlichen Abschnitt (22) oder auf dem zweiten seitlichen Abschnitt (23) angeordnet ist.

6. System (S) nach dem vorherigen Anspruch, **dadurch gekennzeichnet, dass** die Speichereinheit (Z) eine an der Bearbeitungseinheit (2) befestigte Tragbasis (5) umfasst, die in der Lage ist, die eine oder die mehreren zusätzlichen Ebenen (P_{A}) aufzunehmen.

7. System (S) nach einem der vorherigen Ansprüche, **dadurch gekennzeichnet, dass** die eine oder die mehreren zusätzlichen Ebenen (P_{A}) an ihrer Oberfläche mit einem Reibungsabschnitt versehen sind.

8. System (S) nach dem vorherigen Anspruch, **dadurch gekennzeichnet, dass** die eine oder die mehreren zusätzlichen Ebenen (P_{A}) auf einer Seite ein gezahntes Band (61) umfassen, umfassend eine Vielzahl von Zähnen, und die eine oder die mehreren zusätzlichen Ebenen (P_{A}) auf der gegenüberliegenden Seite ein gelochtes Band (62) umfassen, umfassend eine Vielzahl von Löchern, sodass, wenn die eine oder die mehreren zusätzlichen Ebenen (P_{A}) übereinander angeordnet sind, die Zähne des gezahnten Bands (61) einer darunter liegenden zusätzlichen Ebene (P_{A}) in der Lage sind, mit den Löchern des gelochten Bands (62) einer darüber liegenden zusätzlichen Ebene (P_{A}) zu koppeln.

9. System (S) nach dem vorherigen Anspruch, **dadurch gekennzeichnet, dass** jede anfängliche Ebene (P) an beiden Seitenflächen mit einem länglichen Vorsprung (4) versehen ist, der sich entlang der zweiten Achse (Y) erstreckt, und dass auf den länglichen Vorsprüngen (4) Stifte angeordnet sind, die in der Lage sind, mit den Löchern des gelochten Bands (62) der zusätzlichen Ebenen (PA) zu koppeln, oder dass an den länglichen Vorsprüngen (4) Löcher erlangt sind, die in der Lage sind, die Stifte der zusätzlichen Ebenen (PA) aufzunehmen.

10. System (S) nach einem der vorherigen Ansprüche, **dadurch gekennzeichnet, dass** es ein hohles Gehäuse (31) umfasst, das in der Entladestation (3) angeordnet ist, auf die Schnittlinie der Platten ausgerichtet ist und in der Lage ist, die bei der Bearbeitung der Platten anfallenden Abfälle zu sammeln.

11. System (S) nach einem der vorherigen Ansprüche, **dadurch gekennzeichnet, dass** es ein zusätzliches Entlademodul (MA) umfasst, das in der Entladestation (3) angeordnet ist und in der Lage ist, bearbeitete und aus der Maschine (M) kommende Platten aufzunehmen, die seitlich der Schneidelinie angeordnet sind.

12. System (S) nach einem der vorherigen Ansprüche, **dadurch gekennzeichnet, dass** jede Ebene der Vielzahl von anfänglichen Ebenen (P) manuell oder automatisch mittels einer Bewegungseinrichtung oder mittels der Handhabungsvorrichtung (D) bewegbar ist.

13. System (S) nach einem der vorherigen Ansprüche, **dadurch gekennzeichnet, dass** es eine Vielzahl von Sensoren (7) umfasst, die in der Lage sind, das Vorhandensein von Elementen des Systems (S) zu erfassen und entsprechende Signale zu senden.

14. System (S) nach dem vorherigen Anspruch, **dadurch gekennzeichnet, dass** die Vielzahl von Sensoren (7) einen Sensor umfasst, der in der Lage ist, die Position jeder Ebene der Vielzahl von Ebenen (P) entlang der ersten Achse (X) zu überprüfen.

15. System (S) nach einem der Ansprüche 13 oder 14, wenn abhängig von Anspruch 9, **dadurch gekennzeichnet, dass** ein Sensor der Vielzahl von Sensoren (7) in der Lage ist, das Einsetzen der zusätzlichen Ebenen (PA) auf den Vorsprüngen (4) zu erkennen.

16. System (S) nach einem der Ansprüche 13-15, **dadurch gekennzeichnet, dass** ein Sensor der Vielzahl von Sensoren (7) in der Lage ist, das Vorhandensein der zusätzlichen Ebenen (PA) in der Speichereinheit (Z) zu erkennen.

17. System (S) nach einem der Ansprüche 13-16, **dadurch gekennzeichnet, dass** ein Sensor der Vielzahl von Sensoren (7) in der Lage ist, die Anzahl der zusätzlichen Ebenen (P_{A}) in der Speichereinheit (Z) zu erkennen.

18. System (S) nach einem der vorherigen Ansprüche, **dadurch gekennzeichnet, dass** es ein Messelement zum Messen der Positionierung der zusätzlichen Ebenen (P_{A}) zwischen den Anfangsebenen (P) umfasst, und dass ein Sensor der Vielzahl von Sensoren (7) in der Lage ist, die Positionierung des Messelements zu erkennen.

19. Betriebsverfahren eines Systems (S) zur Veränderung der Oberfläche der Entladestation einer Maschine (M) zur Bearbeitung von Platten aus Holz, Kunststoff, Glas, Glasfaser, Keramik und Metall, von einem Typ, der eine Vielzahl von Ausgangsebenen (P) umfasst, nach den Ansprüchen 1 bis 18, **dadurch gekennzeichnet, dass** es die folgenden Schritte umfasst:
A. Bereitstellen einer Speichereinheit (Z), die sich über der Entladestation (3) der Maschine (M) befindet, umfassend eine oder mehrere zusätzliche Ebenen (PA);
B. Überprüfen, ob die mehreren anfänglichen Ebenen (P) an der vordefinierten Position in der Entladestation (3) sind;
C. wenn erforderlich, Aufnehmen der mindestens einen zusätzlichen Ebene (P_{A}) gleichzeitig aus der Speichereinheit (Z);
D. Anordnen mindestens einer zusätzlichen Ebene (P_{A}), die in Schritt C aufgenommen wurde, neben einer anfänglichen Ebene (P).

20. Verfahren nach dem vorherigen Anspruch, **dadurch gekennzeichnet, dass** es den folgenden Teilschritt umfasst:
A1. Stapeln einer oder mehrerer zusätzlicher Ebenen (P_{A}) in der Speichereinheit (Z).

21. Verfahren nach einem der Ansprüche 19 oder 20, **dadurch gekennzeichnet, dass** die Schritte C oder D von der Handhabungsvorrichtung (D) ausgeführt werden.

22. Verfahren nach einem der vorherigen Ansprüche 19-21, **dadurch gekennzeichnet, dass** es die folgenden Teilschritte umfasst:
E. Bearbeiten einer Platte;
F. wenn erforderlich, Aufnehmen der bearbeiteten Platte von der Entladestation (3) der Maschine (M) und Zurückbringen in die Beladestation (1) zur weiteren Bearbeitung.

23. Verfahren nach dem vorherigen Anspruch, **dadurch gekennzeichnet, dass** es den folgenden Teilschritt umfasst:
E1. Ausrichten der Platte, indem sie zu einem Anschlagelement (32) gebracht wird.

24. Verfahren nach einem der Ansprüche 19-23, **dadurch gekennzeichnet, dass** es die folgenden Teilschritte umfasst:
G. Überprüfen des Vorhandenseins und/oder der Anzahl der zusätzlichen Ebenen (PA) in der Speichereinheit (Z);
H. Ausgeben eines Alarmsignals, wenn das Ergebnis der Überprüfung des Schritts G. negativ und/oder Null ist.

## Revendications

1. Système (S) de variation de la surface pour la station de déchargement d'une machine (M) pour panneaux de travail comprenant au moins une machine (M) pour la découpe de panneaux en bois, plastique, verre, fibre de verre, céramique et métal, comprenant une station de chargement (1) pourvue d'un plan de support (11) qui s'étend le long d'un deuxième axe (Y), pour supporter au moins un panneau à usiner, une unité de travail (2) dans laquelle ledit au moins un panneau est coupé le long d'une ligne de coupe parallèle à un premier axe (X) orthogonal audit deuxième axe (Y), une station de déchargement (3) dudit au moins un panneau usiné, pourvue de plusieurs plans initiaux (P), disposés côte à côte et parallèles par rapport audit deuxième axe (Y) et espacés les uns des autres, chacun pouvant être déplacé le long dudit premier axe (X); un ou plusieurs plans supplémentaires (PA) empilables dans une unité de stockage (Z); ledit système (S) étant **caractérisé en ce qu'**il comprend un dispositif de manutention (D) capable de déplacer lesdits un ou plusieurs plans supplémentaires (P_{A}) de ladite unité de stockage (Z) vers ladite station de déchargement (3) et de disposer lesdits un ou plusieurs plans supplémentaires (P_{A}) entre lesdits plans initiaux (P).

2. Système (S) selon la revendication précédente, **caractérisé en ce que** ledit dispositif de manutention (D) comprend une base fixe (D1), disposée à proximité de ladite station de déchargement (3), et un bras mobile (D2) couplé à ladite base fixe (D1), capable de saisir et de déplacer lesdits un ou plusieurs plans supplémentaires (P_{A}).

3. Système (S) selon l'une quelconque des revendications précédentes, **caractérisé en ce que** ladite unité de stockage (Z) est disposée en hauteur par rapport à ladite station de déchargement (3).

4. Système (S) selon la revendication précédente, **caractérisé en ce que** ladite unité de stockage (Z) est disposée sur ladite unité de travail (2) de ladite machine (M).

5. Système (S) selon l'une quelconque des revendications 3 ou 4, **caractérisé en ce que** ladite unité de travail (2) comprend une partie centrale (21), où sont usinés lesdits panneaux, une première partie latérale (22) et une deuxième partie latérale (23), opposée à ladite première partie latérale (22), et **en ce que** ladite unité de stockage (Z) est disposée sur ladite première partie latérale (22) ou sur ladite deuxième partie latérale (23).

6. Système (S) selon la revendication précédente, **caractérisé en ce que** ladite unité de stockage (Z) comprend une base de support (5) fixée à ladite unité de travail (2), capable de loger lesdits un ou plusieurs plans supplémentaires (P_{A}).

7. Système (S) selon l'une quelconque des revendications précédentes, **caractérisé par le fait que** c'est un ou plusieurs plans supplémentaires (P_{A}) sont pourvus d'une partie de friction sur leur surface.

8. Système (S) selon la revendication précédente, **caractérisé en ce que** ledit ou plusieurs plans supplémentaires (P_{A}) comprend une bande dentée (61) sur un côté, comprenant une pluralité de dents, et ledit ou plusieurs plans supplémentaires (P_{A}) comprend une bande trouée (62) sur le côté opposé, comprenant une pluralité de trous, de sorte que, lorsque c'est un ou plusieurs plans supplémentaires (P_{A}) sont empilés, les dents de ladite bande dentée (61) d'un plan supplémentaire (P_{A}) sous-jacent sont capables de s'accoupler avec les trous de ladite bande trouée (62) d'un plan supplémentaire (P_{A}) sus-jacent.

9. Système (S) selon la revendication précédente, **caractérisé en ce que** chaque plan initial (P) est pourvu sur ses deux surfaces latérales d'une saillie allongée (4), qui s'étend le long dudit deuxième axe (Y), et **en ce que** sur lesdites saillies allongées (4) sont disposées des goupilles capables de s'accoupler avec les trous de ladite bande trouée (62) desdits plans supplémentaires (PA), ou sur lesdites saillies allongées (4) sont obtenus des trous capables de loger les goupilles desdits plans supplémentaires (PA).

10. Système (S) selon l'une quelconque des revendications précédentes, **caractérisé en ce qu'**il comprend un boîtier creux (31), disposé dans ladite station de déchargement (3), aligné sur ladite ligne de coupe desdits panneaux, capable de recueillir les chutes provenant du travail desdits panneaux.

11. Système (S) selon l'une quelconque des revendications précédentes, **caractérisé en ce qu'**il comprend un module de déchargement supplémentaire (MA), disposé dans ladite station de déchargement (3), capable de loger les panneaux usinés et sortant de ladite machine (M), disposée latéralement à ladite ligne de coupe.

12. Système (S) selon l'une quelconque des revendications précédentes, **caractérisé en ce que** chaque plan de ladite pluralité de plans initiaux (P) est déplaçable manuellement ou automatiquement au moyen de moyens de déplacement, ou au moyen dudit dispositif de manutention (D).

13. Système (S) selon l'une quelconque des revendications précédentes, **caractérisé en ce qu'**il comprend une pluralité de capteurs (7) capables de détecter la présence d'éléments dudit système (S) et d'envoyer des signaux correspondants.

14. Système (S) selon la revendication précédente, **caractérisé en ce que** ladite pluralité de capteurs (7) comprend un capteur capable de vérifier la position de chaque plan de ladite pluralité de plans (P) le long dudit premier axe (X).

15. Système (S) selon l'une quelconque des revendications 13 ou 14, lorsqu'il dépend de la revendication 9, **caractérisé en ce qu'**un capteur de ladite pluralité de capteurs (7) est capable de détecter l'insertion desdits plans supplémentaires (PA) sur lesdites saillies (4).

16. Système (S) selon l'une des revendications 13 à 15, **caractérisé par le fait qu'**un capteur de ladite pluralité de capteurs (7) est capable de détecter la présence desdits plans supplémentaires (PA) dans ladite unité de stockage (Z).

17. Système (S) selon l'une des revendications 13 à 16, **caractérisé par le fait qu'**un capteur de ladite pluralité de capteurs (7) est capable de détecter le nombre desdits plans supplémentaires (P_{A}) dans ladite unité de stockage (Z).

18. Système (S) selon l'une quelconque des revendications précédentes, **caractérisé en ce qu'**il comprend un élément de mesure pour mesurer le positionnement desdits plans supplémentaires (P_{A}) entre lesdits plans initiaux (P), et **en ce qu'**un capteur de ladite pluralité de capteurs (7) est capable de détecter le positionnement dudit élément de mesure.

19. Procédé de fonctionnement d'un système (S) de variation de la surface de la station de déchargement d'une machine (M) pour panneaux de travail en bois, plastique, verre, fibre de verre, céramique et métal, du type comprenant une pluralité de plans initiaux (P), selon les revendications 1 à 18, **caractérisé en ce qu'**il comprend les étapes suivantes:
A. fournir une unité de stockage (Z) surélevée au-dessus de ladite station de déchargement (3) de ladite machine (M), comprenant un ou plusieurs plans supplémentaires (PA);
B. vérifier si ladite pluralité de plans initiaux (P) se trouve dans la position prédéfinie dans ladite station de déchargement (3);
C. si nécessaire, prélever au moins un plan supplémentaire (P_{A}) à la fois dans l'unité de stockage (Z) ;
D. ranger au moins un plan supplémentaire (P_{A}), pris dans ladite étape C., à côté d'un plan initial (P).

20. Procédé selon la revendication précédente, **caractérisé en ce qu'**il comprend la sous-étape suivante :
A1. empiler un ou plusieurs plans supplémentaires (PA) dans ladite unité de stockage (Z).

21. Procédé selon l'une quelconque des revendications 19 ou 20, **caractérisé par le fait que** les étapes C ou D sont effectuées par le dispositif de manutention (D).

22. Procédé selon l'une quelconque des revendications précédentes 19-21, **caractérisé par le fait qu'**il comprend les sous-étapes suivantes:
E. usiner un panneau;
F. si nécessaire, ramasser le panneau usiné à partir de la station de déchargement (3) de la machine (M) et le retourner à la station de chargement (1) pour un usinage ultérieur.

23. Procédé selon la revendication précédente, **caractérisé en ce qu'**il comprend la sous-étape suivante :
E1. aligner ledit panneau en l'amenant vers un élément de butée (32).

24. Procédé selon l'une quelconque des revendications 19 à 23, **caractérisé en ce qu'**il comprend les sous-étapes suivantes:
G. vérifier la présence et/ou le nombre desdits plans supplémentaires (PA) dans ladite unité de stockage (Z);
H. émettre un signal d'alarme si le résultat de la vérification de ladite étape G. est négatif et/ou nul.
